# EUROPEAN PATENT APPLICATION

(11) **EP 2 030 878 A1**
(43) Date of publication of application: **04.03.2009**
(21) Application number: 07712552.4
(22) Date of filing: 02.02.2007
(51) Int. Cl.: B62D 65/14, B65G 47/26

(54) **METHOD FOR PRODUCING A TRAY WITH A MOSAIC OF PIECES, AND TRAY WITH THE MOSAIC**

(30) Priority: 01.03.2006 ES 200600503
(71) Applicant: Oribay Mirror Buttons, S.L., 20018 San Sebastian (ES)
(72) Inventor: MUÑOZ SANTOS, José, E-20018 San Sebastian (ES); GÜELL LAHIRIGOYEN, Sandra, E-20018 San Sebastian (ES); MUÑIOZ SANTOS, Ignacio, E-20018 San Sebastian (ES); MARTINEZ AÑIBARRO DÍEZ, Igor, E-20018 San Sebastian (ES); LIZASO VIÑARAS, Xavier, E-20018 San Sebastian (ES); RUIZDELGADO EGUIGUREN, Elean, E-20018 San Sebastian (ES); ARRUTI ECHEVERRIA, Jon, E-20018 San Sebastian (ES)
(74) Representative: Gil-Vega, Victor
(86) International application number: PCT/ES2007/000058
(87) International publication number: WO 2007/099183

(57) **Abstract**

The method consists in that a series of pieces (2), which are to form the means for fixing a rear-view mirror or light support to the windshield of a vehicle, after being provided beforehand with the corresponding adhesive for fixing these pieces (2) onto the windshield, are positioned on a board forming a tray (1), in a Cartesian arrangement with a positioning tolerance not greater than two tenths, the surface of the tray (1), on which the pieces (2) are arranged, being silicone-coated, so as to allow detachment thereof by a robot, the latter being intended to place each of said pieces on a windshield of a vehicle or the like during a vehicle manufacturing process.

## Description

### Subject of the invention

The present invention relates to a method for processing a tray with an array of pieces and more specifically to the way of achieving on a support tray an array of pieces which are arranged along the axes of Cartesian coordinates, equidistant from each other and suitable for being picked up automatically by a robot which will place them on a given object or in a given location.

The invention also relates to the tray with the array of pieces, the latter being intended to be fixed to the windshield of a vehicle as a support for a rear-view mirror and/or light or rain sensor for motor vehicle windows, without excluding other applications where application of the method and use of the product obtained is feasible.

### Prior art

As is known, the pieces which are fixed to the windshields of motor vehicles in order to act as a support for a rear-view mirror and/or a light or rain sensor initially had to be provided with adhesive on both sides, with the corresponding protective means, which at the moment of application thereof on the rear-view mirror were removed and the piece was fixed to the arm of the mirror and the entire assembly fixed to the windshield of the vehicle, the whole of this process being slow, imprecise and not mechanized in any way.

Nevertheless, subsequently the pieces in question were applied onto an adhesive roll, with the protective means and tongue situated on the said pieces, so as to reinforce the protective means and allow removal of the latter, so that the roll and the tongues were stamped after application of the adhesive, dispatching the whole assembly in bulk to the client, namely to the automobile windshield manufacturer for use thereof.

According to this procedure the pieces are fed in pairs, the adhesive roll being fed so that the operator is able to apply the adhesive to the piece, said pieces being finally packaged inside a container so that the client who receives them removes the adhesive protective means and applies the pieces to the windows or windshields of the vehicle.

In order to achieve greater productivity there exists a second way of implementing the pieces handling process which consists in the pieces being arranged on the cut portions previously provided, forming strips of pieces which are arranged on a tray, so that in this case trays are handled, this being able to be performed by means of a robot, namely automatically, although the application of the adhesive and positioning of the pieces on the tray is performed manually.

### Description of the invention

The method which is proposed has certain characteristics which are able to solve the problems mentioned in the previous section and achieve greater productivity, total mechanization and more efficient final execution of the process.

More specifically, the method according to the invention consists in handling the pieces, applying adhesive onto the piece which forms the support for the arm of the rear-view mirror or light and/or rain sensor, as well as placing or positioning the pieces with the adhesive onto silicone-coated trays, in a Cartesian arrangement and with a positioning tolerance of not more than 2 tenths of a millimetre, all of which is performed in an automated manner, namely by robotized means which ensure the positioning tolerance of the resultant array or arrangement on the tray.

In addition to the method or process mentioned, the invention also relates to the tray with the array of pieces thus obtained, said tray forming a board or platform on which a plurality of pieces are arranged along the axes of Cartesian coordinates, providing ultimately a reliable system for the robots of the production process line which have the function of placing said pieces on the windshields of a vehicle or the like, with the following advantages compared to conventional systems:
- location of the pieces by the robot is guaranteed owing to the arrangement in an array along Cartesian axes, without the need for additional artificial viewing systems;
- an increase in the handling precision is achieved, therefore minimizing possible errors in the manufacturing process;
- the operations performed by the operator are reduced, with a consequent saving in costs and increase in the reliability of the process.

Finally, it is pointed out that, for arrangement of the pieces on the tray in order to form the array, it is envisaged providing the associated trays with a silicone coating beforehand so that the pieces may be easily detached.

To summarize, it consists of a process in which a perfect and predetermined position of the pieces is achieved so that the robot is able to pick them up in a precise manner and can place them without interruption and in a completely reliable manner.

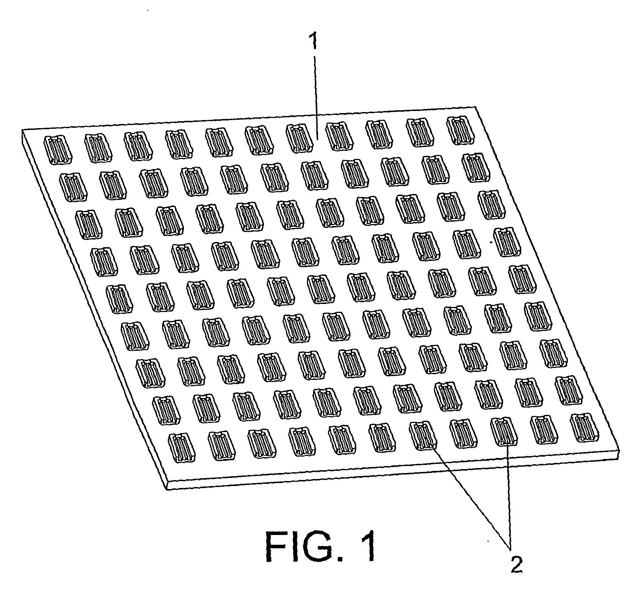

### Description of the drawing

By way of complement to the description given and with the aim of facilitating greater understanding of the features of the invention, in accordance with a practical example of embodiment thereof, a single sheet of drawings is attached by way of an integral part of said description, said drawings being of an illustrative and non-limiting nature and showing, in the single figure thereof, a general perspective view from above of the tray with the array of pieces, all of which performed in accordance with the object of the invention.

### Preferred embodiment of the invention

According to the invention, the tray (1) which is formed by a board or similar, is occupied by a plurality of pieces (2) which are arranged in an automated manner, equally spaced from each other, along Cartesian axes.

Specifically, the pieces (2) are intended to be fixed, for example on a motor vehicle windshield, so as to be able to receive at the rear an arm of a rear-view mirror or the support of a light, rain or other sensor. These pieces (2) are provided with the corresponding adhesive with a protective means which is detached at the moment of application thereof and distribution of them on the tray (1) is performed in accordance with predetermined positions corresponding to a Cartesian arrangement so that a robot is able to pick them up in a precise manner and fix them to the windshield of a vehicle or the like, these pieces (2) being arranged on the tray (1) in a programmed manner. The surface of this tray (1) is provided beforehand with a layer of silicone on which the pieces (2) are arranged, allowing the latter to be picked up by the robot.

As regards the way of achieving the array of pieces (2) on the tray (1), it must be emphasized that these pieces (2) are arranged firstly in bulk inside a chute, in an ordered manner, so that they emerge from said chute in line and with the bottom of the piece (2) directed downwards, allowing positioning of said pieces on the corresponding roll of adhesive, which roll with the cut portions is arranged at a given distance and with a given orientation.

In the process, when the array of pieces (2) is assembled on the trays (1), the latter are arranged on tray holders where they are stored for transportation to the manufacturers.

Jn any case, the chute for storing the pieces directs them towards the tray, rejecting any piece which is not positioned in the right direction, with the special feature that, once the pieces are arranged on the roll of adhesive and on its cut portion and after the tray on which the array of pieces (2) will be provided has been deposited on the corresponding tray holder, then the pieces are placed in pairs on the cut portion and, in an automated manner, namely by means of a robot, the pieces are positioned at a distance x and y from the edge of the tray, separating the pieces by a programmed distance, repeating the operation until the array of pieces (2) has been completed, the trays (1) with the array of pieces (2) being displaced as far as the tray holder which, once full, is closed and is sent to its final destination.

## Claims

1. Method for processing a tray with an array of pieces, said pieces being intended for fixing the support of an arm of a rear-view mirror and/or light and/or rain support of a motor vehicle, said support being intended to be fixed to the windshield or the like of a motor vehicle together with the arm of the rear-view mirror, the light support or the like, **characterized in that** it consists in feeding the pieces in an automated manner and from a storage chute towards a tray in which an array of pieces is to be formed, the latter being provided with the corresponding adhesive for fixing thereof, with the particular feature that the arrangement of the pieces which are to form the array on the tray is performed in a Cartesian layout, each of said pieces having a corresponding specific position which allows precise handling of said pieces by a robot from the tray to the windshield of the vehicle or the like.

2. Method for processing a tray with an array of pieces according to Claim 1, **characterized in that** the tolerance of Cartesian positioning of the pieces which form the array on the tray is less than two tenths of a millimetre.

3. Tray with an array of pieces according to the method of the previous claims, **characterized in that** it is formed by means of a board (1) with a silicone-coated protective surface, on which a plurality of pieces (2) with adhesive detachable from the protective surface are positioned in a Cartesian arrangement, each piece (2) being situated in a specific point along two axes of Cartesian coordinates so as to allow each one of these pieces (2) to be picked up by means of a robot.
